# EUROPEAN PATENT APPLICATION

(11) **EP 1 256 747 A2**
(43) Date of publication of application: **13.11.2002**
(21) Application number: 02253170.1
(22) Date of filing: 07.05.2002
(51) Int. Cl.: F16H 59/36, F16H 63/48

(54) **Vehicle speed sensor mounting structure for automatic transmission**

(30) Priority: 08.05.2001 JP 2001137214
(71) Applicant: JATCO Ltd, Fuji-shi, Shizuoka 417-8585 (JP)
(72) Inventor: Yamane, Nobufumi, c/o Jatco Ltd, Fuji-City, Shizuoka 417-8585 (JP); Watanabe, Shinji, c/o Jatco Ltd, Fuji-City, Shizuoka 417-8585 (JP)
(74) Representative: Faulkner, Thomas John

(57) **Abstract**

A vehicle speed sensor (15) mounting structure for a vehicle automatic transmission (10) including a transmission case (11) for a transmission mechanism, and an extension cover (12) accommodating a parking gear (22) on the output shaft (13) of the transmission mechanism. The transmission case (11) and the extension cover (12) are arranged in abutment with each other at respective mating surfaces. The vehicle speed sensor (15) is arranged within the extension cover (12), and mounted adjacent to the mating surfaces of the transmission case (11) and the extension cover (12).

## Description

### 1. Field of the Invention

The present invention relates to a structure for mounting a vehicle speed sensor onto an automatic transmission of the vehicle.

### 2. Description of Related Art

Generally, a vehicle speed sensor for an automatic transmission is mounted in place by inserting the sensor from outside, either into a mounting hole in a transmission case for the transmission mechanism, inclusive of an output shaft, or into a mounting hole in an extension cover for a parking gear attached to the output shaft, and connecting to the sensor a wiring harness that extends along the outer periphery of the transmission case or the extension cover.

Such mounting structure often suffers from damage of the sensor or wiring harness when they are brought into unintended contact with the vehicle body upon assembly of the automatic transmission into the vehicle body, or when hit by rebounded pebbles or stones or subjected to vibration during running of the vehicle.

### SUMMARY OF THE INVENTION

It is therefore a primary object of the present invention to eliminate the aforementioned problem, and provide an improved vehicle speed sensor mounting structure capable of protecting the vehicle speed sensor or associated wiring harness from damages.

It is another object of the present invention to provide an improved vehicle speed sensor mounting structure that allows mounting of the vehicle speed sensor in a positive and facilitated manner.

It is still another object of the present invention to provide an improved vehicle speed sensor mounting structure that allows an effective electromagnetic shielding of the vehicle speed sensor from external noise.

In view of these and other objects, according to the present invention, there is provided a vehicle speed sensor mounting structure for a vehicle automatic transmission comprising a transmission case for a transmission mechanism including an output shaft that projects into an extension cover accommodating a parking gear provided on the output shaft, said transmission case and said extension cover being arranged in abutment with each other at respective mating surfaces, wherein said vehicle speed sensor is arranged within said extension cover, and mounted adjacent to said mating surfaces of the transmission case and the extension cover.

With the vehicle speed sensor mounting structure according to the present invention, since the vehicle speed sensor is arranged within the transmission before the extension case is attached to the transmission case, it is possible positively to protect the sensor and/or associated wiring harness from the above-mentioned damages which would be otherwise caused during the assembly of the automatic transmission or during running of the vehicle. The sensor mounting structure according to the present invention also allows definite positioning and fixing of the sensor in a facilitated manner, thereby eliminating separate fixing members which were conventionally required for fixing the sensor to the automatic transmission from outside.

Moreover, according to the present invention, since the vehicle speed sensor is mounted adjacent to the mating surfaces of the transmission case and the extension cover, it is possible to define the reference position of the sensor particularly in the radial direction, upon positioning and fixing of the sensor in place.

The present invention may be suitably applied to a vehicle speed sensor that detects the vehicle speed based on rotation of the parking gear on the output shaft that, in turn, is situated adjacent to the mating surfaces of the transmission case and the cover. In this instance, it is preferred that the vehicle speed sensor is mounted at a position below a horizontal plane including a center axis of said output shaft, and opposite to a parking gear operating mechanism selectively engageable with said parking gear, with reference to a vertical plane including said center axis of the output shaft. Such an arrangement makes it possible to minimize the radial dimension of the transmission case while ensuring that the sensor is situated at a position where it is free from interference with the parking gear operating mechanism.

It is preferred that the transmission case has a wall surface region adjacent to its mating surface, which is provided with a first positioning means and a first mounting hole, the vehicle speed sensor is provided with a second positioning means engageable with the first positioning means, and a second mounting hole that can be aligned with the first mounting hole, and the vehicle speed sensor is mounted in position by a fastener passed through the first and second mounting holes, with the first and second positioning means in engagement with each other. Such an arrangement makes it possible to definitely position and positively fix the sensor in place.

It is further preferred that a wiring harness connected to, and extending from the vehicle speed sensor, is also arranged within the extension cover. Such an arrangement makes it possible positively to prevent damage of the wiring harness during assembly of the automatic transmission or in use of the vehicle, while effectively shielding the sensor from external electromagnetic noise.

In this instance, the wiring harness may be arranged within a lubricant return passage provided in the extension cover. It is noted that, generally, the lubricant return passage for returning lubricant from the automatic transmission to the oil pan has a large cross-sectional area though a relatively small amount of lubricant is usually passed therethrough. As such, the wiring harness arranged within the lubricant return passage does not affect flow of the lubricant. Moreover, it is unnecessary to form additional hole for the accommodation of the wiring harness, thereby minimizing the number of machining processes, or avoiding possible reduction in mechanical strength of the transmission case or the extension cover, which would otherwise be caused by machining.

### BRIEF DESCRIPTION OF THE DRAWINGS

The present invention will be further explained below with reference to a preferred embodiment shown in the accompanying drawings.

FIG. 1 is a schematic view showing an automatic transmission to which the present invention is applied.

FIGS. 2a and 2b are plan view and side view, respectively, of a vehicle speed sensor and associated wiring harness, which are used in the present invention.

FIG. 3 is an end view of the transmission case in the automatic transmission shown in FIG. 1.

FIG. 4 is a view showing the positional relationship between the vehicle speed sensor and a parking gear.

FIG. 5 is a view showing the positional relationship between the transmission case and the vehicle speed sensor.

FIG. 6 is an end view similar to FIG. 3, but showing the parking gear and the parking brake operating mechanism mounted in place and the wiring harness connected to the speed sensor.

FIG. 7 is an end view similar to FIG. 3, but showing the lower half of the transmission case in enlarged scale, with the parking gear and the parking brake mechanism removed.

FIG. 8 is an exemplary plan view showing a control valve body arranged within an oil pan.

### DETAILED DESCRIPTION OF THE PREFERRED EMBODIMENT

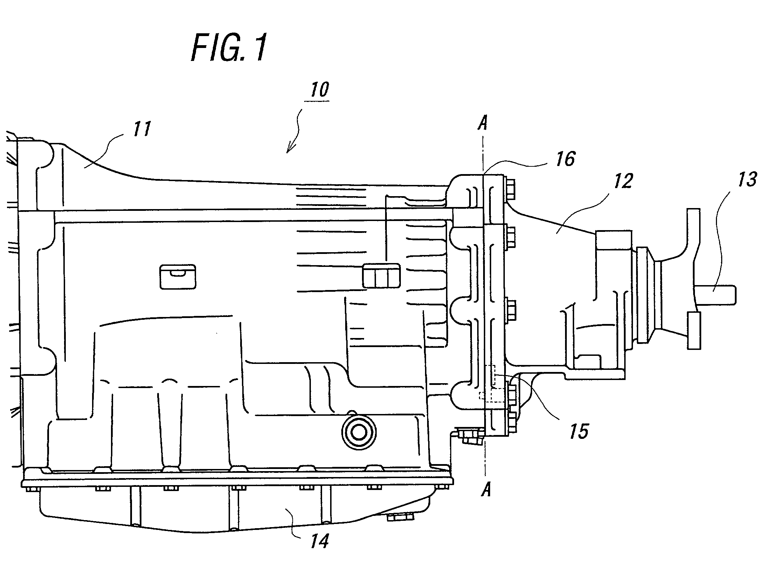

FIG. 1 schematically shows an automatic transmission to which a vehicle speed sensor mounting structure according to the present invention is suitably applied. The automatic transmission 10 includes a torque converter housing (not shown), a transmission case 11 and an extension cover 12, which are arranged in alignment with each other so that the output shaft 13 of the transmission mechanism accommodated in the transmission case 11 extends through the extension case 12. An oil pan 14 is attached to the bottom portion of the transmission case 11. A rotation sensor 15 indicated by broken line is arranged at the junction 16 between the transmission case 11 and the extension case 12. It is to be noted that the illustrated automatic transmission 10 is for a front-engine rear-drive vehicle, though the present invention may be similarly applied to a front-engine front-drive vehicle.

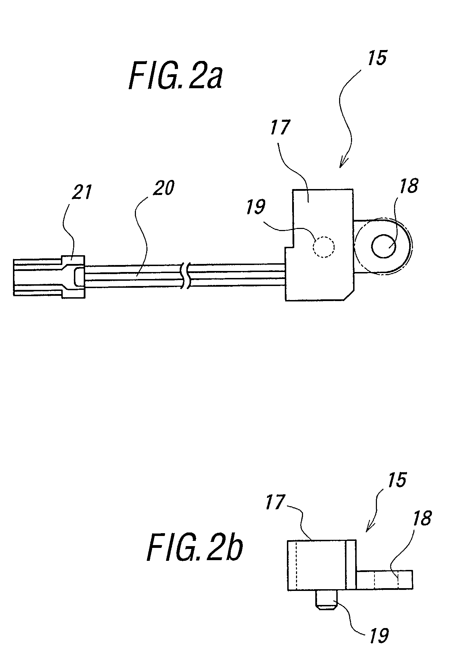

With reference to FIGS. 2a and 2b, the speed sensor 15 includes a body 17 having a bolt hole 18 and a positioning projection 19, for positioning and fixing the speed sensor in place as will be described hereinafter. Extending from the sensor body 17 is a wiring harness 20, for supplying electric power and transmitting the detected vehicle speed signal. The wiring harness 20 terminates in a free end in the form of a connector 21.

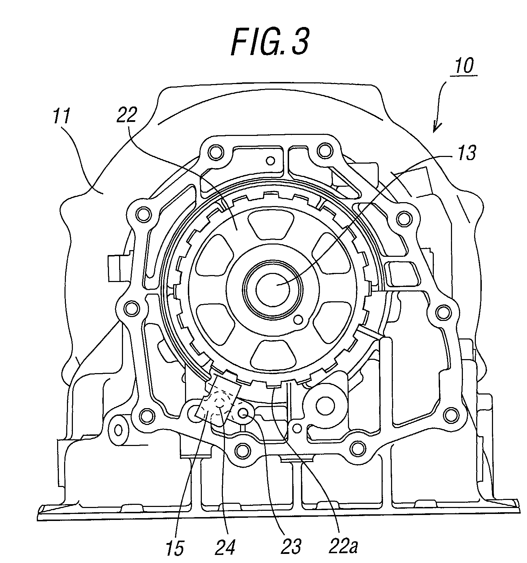

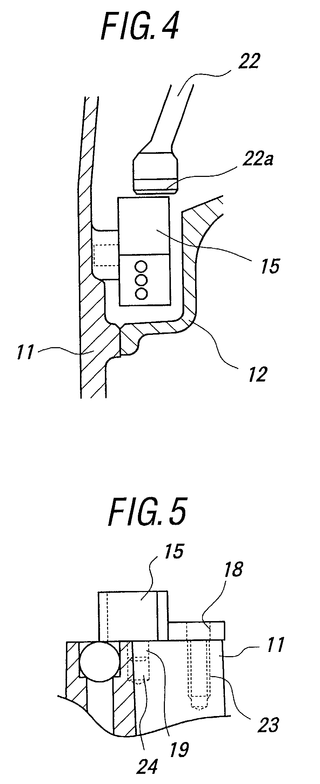

FIG. 3 shows the transmission case 11 as seen from the side of the extension case 12. The output shaft 13 extending through the extension case 12 is provided with a parking gear 22 having a number of teeth 22a thereon (also see Fig. 4). It is assumed, by way of example, that the speed sensor 15 detects the revolution speed of the output shaft 13 by sensing the teeth 22a of the parking gear 22, as in a conventional rotary encoder. FIG. 4 shows the positional relationship between the teeth 22a of the parking gear 22 and the speed sensor 15. It can be seen that the speed sensor 15 is arranged closely adjacent to the teeth 22a of the parking gear 22, so as to ensure that the vehicle speed is detected highly accurately.

The transmission case 11 has a bolt hole 23 and a positioning hole 24, for positioning and fixing of the speed sensor 15, respectively. FIG. 5 shows the positional relationship between the transmission case 11 and the sensor 15. Upon mounting the sensor 15, the positioning projection 19 of the sensor 15 is inserted into the positioning hole 24 of the transmission case 11, the respective bolt holes 18, 23 are aligned with each other, and then the sensor 15 is fixed by a bolt, which is passed through the bolt holes 18, 23.

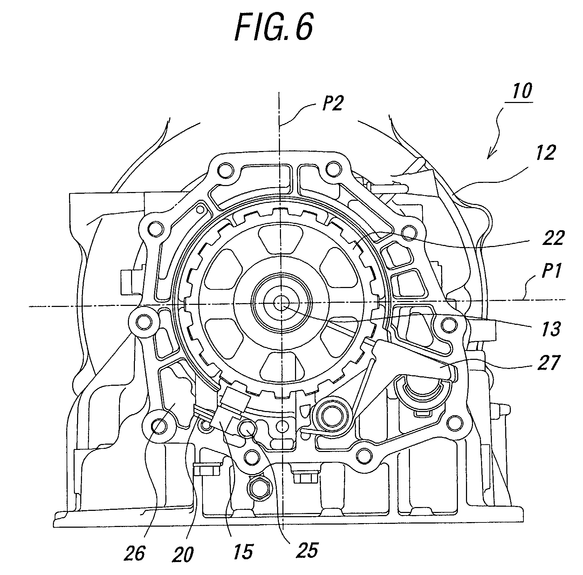

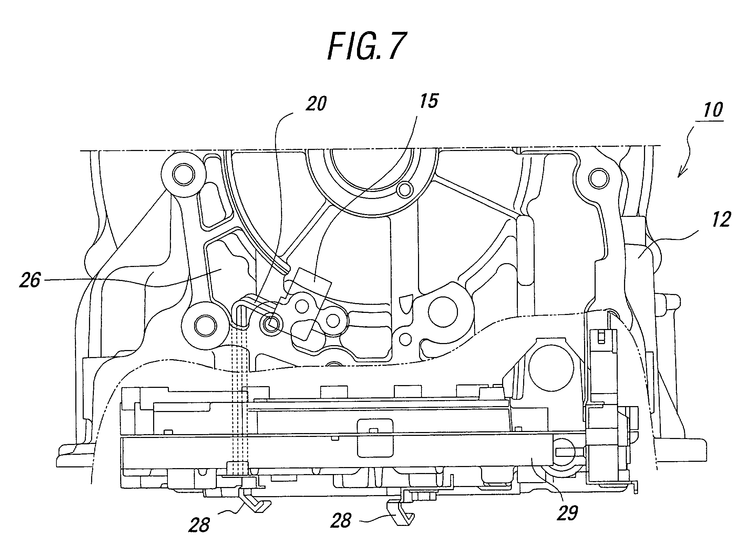

FIGS. 6 and 7 also show the details of the mounting structure for the speed sensor 15 according to the present invention. It can be seen that the sensor 15 is fixedly secured to the transmission case 11 by a bolt 25, which is passed through the bolt holes 18, 23, and that the wiring harness 20 is introduced into a lubricant return passage 26 that is formed in the extension case 12.

As shown, the sensor 15 is mounted at a predetermined position on a lower side of the transmission case 11, i.e., a side close to the oil pan, below a horizontal plane P1 indicated by a imaginary line in FIGS. 6 and 7, which includes the center axis of the output shaft 13, and opposite to a parking brake operating mechanism 27 with reference to a vertical plane P2 also indicated by imaginary line in FIG. 6. Such arrangement makes it possible to minimize the length of the wiring harness 20, to prevent the wiring harness 20 from interfering with other components of the automatic transmission, and also to prevent the speed sensor 15 from interfering with the parking brake operating mechanism 27.

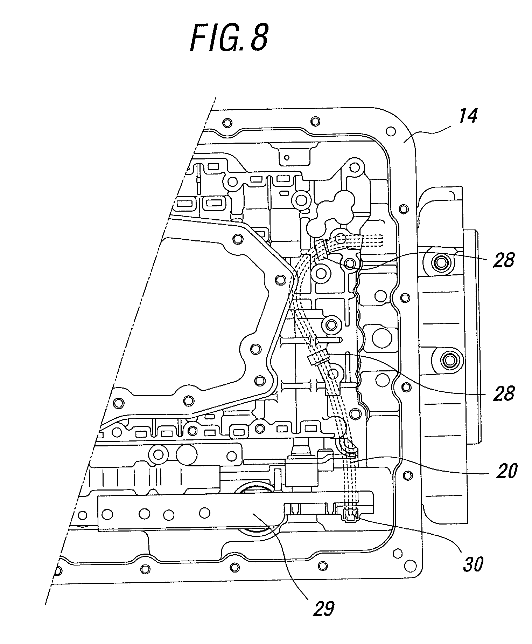

The wiring harness 20 extending from the speed sensor 15 is passed through the oil return passage 26 within the transmission case 11 and fixed by clips 28 to a control valve body 29 arranged within the oil pan 14, as shown in FIGS. 7 and 8. The wiring harness 20 is electrically connected to an automatic transmission controller arranged externally of the automatic transmission, by inserting the connector 21 (see FIG. 2) into a connector hole 30 in the control valve body 29.

The illustrated embodiment of the vehicle speed sensor mounting structure according to the present invention is highly advantageous in that the wiring harness of the minimized length can be arranged in a facilitated manner, while minimizing the number of necessary components, such as fixing clips.

The present invention thus provides an improved vehicle speed sensor mounting structure capable of protecting the vehicle speed sensor or associated wiring harness from damage, allowing the mounting of the vehicle speed sensor in a positive and facilitated manner, and effectively shielding the vehicle speed sensor from external electromagnetic noise.

While the present invention has been described above with reference to a specific embodiment shown in the accompanying drawings, it has been presented for an illustrative purpose only, and various changes or modifications may be made without departing from the scope of the invention as defined by the appended claims.

## Claims

1. A vehicle speed sensor mounting structure for a vehicle automatic transmission comprising a transmission case for a transmission mechanism including an output shaft that projects into an extension cover accommodating a parking gear provided on the output shaft, said transmission case and said extension cover being arranged in abutment with each other at respective mating surfaces, wherein said vehicle speed sensor is arranged within said extension cover, and mounted adjacent to said mating surfaces of the transmission case and the extension cover.

2. The mounting structure according to Claim 1, wherein said vehicle speed sensor detects the vehicle speed based on rotation of the parking gear on said output shaft, said parking gear being situated adjacent to said mating surfaces of the transmission case and the extension cover, and wherein said vehicle speed sensor is mounted at a position below a horizontal plane including a center axis of said output shaft, and opposite to a parking gear operating mechanism selectively engageable with said parking gear, with reference to a vertical plane including said center axis of the output shaft.

3. The mounting structure according to Claim 1, wherein said transmission case has a wall surface region adjacent to said mating surface thereof, which is provided with a first positioning means and a first mounting hole, wherein said vehicle speed sensor is provided with a second positioning means engageable with said first positioning means, and a second mounting hole that can be aligned with said first mounting hole, and wherein said vehicle speed sensor is mounted in position by a fastener passed through said first and second mounting holes, with said first and second positioning means in engagement with each other.

4. The mounting structure according to Claim 1, wherein a wiring harness is connected to, and extends from said vehicle speed sensor, said wiring harness being arranged within said extension cover.

5. The mounting structure according to Claim 4, wherein said wiring harness is arranged within a lubricant return passage provided in said extension cover.
